# EUROPEAN PATENT SPECIFICATION

(11) **EP 1 744 065 B1**
(45) Date of publication and mention of the grant of the patent: **09.07.2008**
(21) Application number: 06076384.4
(22) Date of filing: 10.07.2006
(51) Int. Cl.: F16B 7/04

(54) **Cross clamp**
Kreuzklemmvorrichtung
Bride de connexion croisée

(30) Priority: 14.07.2005 IT MI20051341
(43) Date of publication of application: 17.01.2007
(73) Proprietor: Rexnord Marbett s.r.l., 42015 Correggio (Reggio Emilia) (IT)
(72) Inventor: Andreoli, Andrea, Modena, 41010 (IT)
(74) Representative: van Loon, C.J.J.

(56) References cited:
- DE-A1- 10 221 233
- US-A- 369 143
- US-A- 1 057 658
- US-A- 2 817 546
- US-A- 3 096 109
- US-A- 4 275 872

## Description

The present invention relates to an improved cross clamp, adapted to allow the connection of at least two bars, particularly but not exclusively for the use in conveyors of articles.

Cross clamps are used as joints between pairs of bars, and they allow making the two bars integral, so that the respective longitudinal axes form a predetermined angle, typically of 90° or 45°.

Cross clamps are for instance broadly used in the field of conveyors of articles: in such applications, the cross clamps act as a connection between pairs of bars, one mounted to the frame of the conveyor, the other intended to support side guides for the transported articles, or to support different types of sensors, such as, for instance, photoelectric detectors.

A known cross clamp is for example shown in the U.S. design patent No. US D503,333 S: such a cross clamp includes a generically cylindrical hollow body open at the two ends thereof, with a pair of through holes which are spaced apart along the axis of the cylindrical body, and whose respective axes are orthogonal to the axis of the cylindrical body and form an angle of 90° between them. The two bars that are to be connected are each one inserted into one of the two through holes (and therefore the angle that the two bars form is of 90°) and they are blocked in position by means of respective connecting rods formed by eyelet threaded rods, inserted into the cylindrical body from the two openings at the ends thereof.

The Applicant has observed that such a cross clamp, even if satisfactory under several points of view, nevertheless shows some problems.

For instance, the necessity of using two eyelet rods has a non negligible impact on the cost of the component. Respective knobs can be associated to the two eyelet rods, for an easier tightening thereof without the use of wrenches (that are instead necessary in the case screw nuts are used for the tightening), and such knobs are additional components whose production and storage cost has a significant impact on the overall cost of the component.

The necessity of using two eyelet rods also has a non negligible impact on the installation time: for each clamp (in a typical transport line there can be several tens thereof) the technician has in fact to insert the two eyelet rods into the cylindrical body, insert the two bars into the two through holes, having to ensure that they are also inserted into the eyelet of the respective rod, and then tighten the two rods. This last operation can be made easier and faster by providing the aforementioned knobs, so that the use of wrenches or similar tools is not needed, but as mentioned above this has an impact on the purchase costs of the component.

Another disadvantageous aspect resides in the fact that since the through holes formed in the clamp body have diameters sized on the diameters of the bars intended to be joined, there is necessity to have in the catalogue, or in the store, a variety of clamp bodies, with the different possible combinations of diameters of the through holes.

Similar considerations can be made with respect to the angle between the bars to be joined: if it is desired to be able to join bars so that the angle they form is different from 90°, for example 45°, it would be necessary to realize (and therefore to have in catalogue and in the store) different clamp bodies, in which the angle formed by the axes of the through holes is the desired one.

Known clamps are also shown in US patent No. US A 3,096,109. The clamps of this document are constructed so that a first bar is fixed in the clamp and a second bar can either, in a first embodiment, rotate freely around an axis perpendicular to both bars or, in a second embodiment, cannot rotate around an axis perpendicular to both bars at all.

Known clamps are similarly shown in US patent No. US A 1,057,658 upon which the preamble of claim 1 is based.

In view of the state of the art outlined above, the Applicant has tackled the problem of providing an improved cross clamp, that is not, or at least less affected by the discussed problems.

According to the present invention, a cross clamp is provided as set forth in the appended claim 1.

It is pointed out that, for the purposes of the present invention, by "cross clamp" there is intended any clamp that allows rigidly joining at least two bars to each other, in such way that the axes of the two joined bars form there between an angle ranging from 0° to 180°, particularly but not limitatively angles of 90° or 45° or 60°. In other words, for the purposes of the present invention, by "cross clamp" there is not only meant a clamp that allows rigidly joining two bars so that the respective axes are orthogonal.

The features and the advantages of the present invention will be made apparent by the following detailed description of some embodiments with reference to the attached drawings, these embodiments of the invention being provided purely by way of non limitative examples. In the figures:
Figure 1 is an axonometric view of a short section of a conveyor of articles in which a cross clamp according to an embodiment of the present invention is used;
Figure 2 is an axonometric exploded view of a cross clamp according to an embodiment of the present invention;
Figure 3 is an axonometric view from above of a body of the clamp of Figure 2;
Figure 4 is an axonometric view from below of the body of the clamp;
Figure 5 is a sectional view according to a plane containing the axis A-A of Figure 3 of the body of the clamp;
Figure 6 is a sectional view according to a plane containing the axis C1-C1 of the body of the clamp;
Figure 7 is an elevation view of the clamp;
Figure 8 is a top-plan view of the clamp;
Figure 9 is a plan view from below of the clamp (with one of the two bars in a different position);
Figure 10 is a sectional view of the clamp according to a plane containing the line X-X of Figure 8;
Figure 11 is a sectional view of the clamp according to a plane containing the line XI-XI of Figure 8;
Figure 12 is an axonometric exploded view of a cross clamp according to an embodiment which is not part of the present invention;
Figure 13 is an axonometric view from above of a body of the clamp of Figure 12;
Figure 14 is an axonometric view from below of the body of the clamp of Figure 12;
Figure 15 is a sectional view according to a plane containing the axis XV-XV of Figure 13 of the body of the clamp;
Figure 16 is a sectional view according to a plane containing the axis XVI-XVI of the body of the clamp;
Figure 17 is a planar development of an element formed of shorn metal adapted to form, by folding, the body of the clamp of Figures from 12 to 16; and
Figure 18 is a sectional view of the clamp of Figure 12 once mounted.

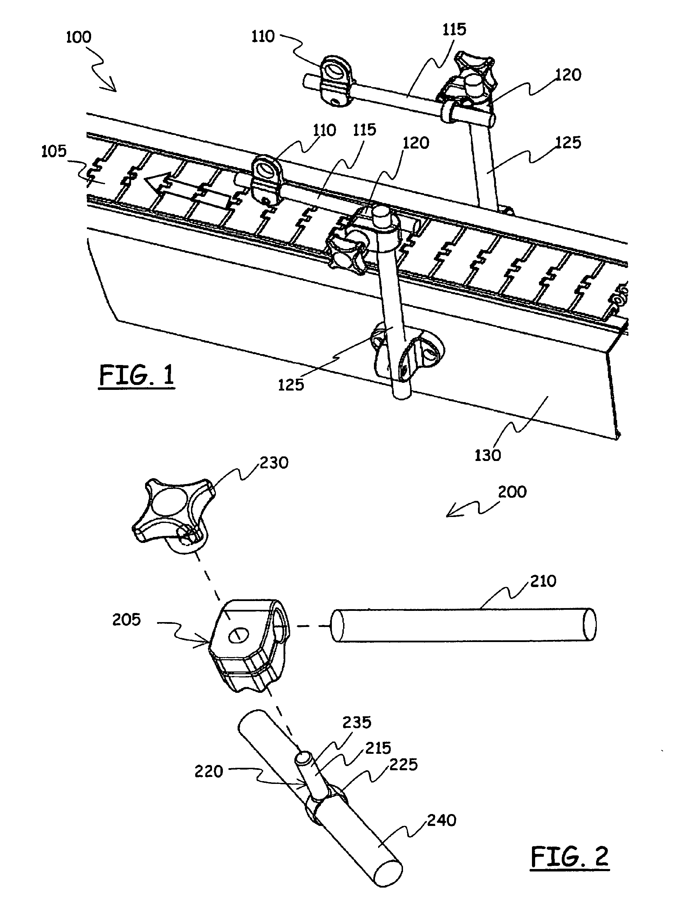

With reference to the drawings, in Figure 1 a short line 100 of a conveyor of articles is shown, for instance but not limitatively for transporting plastic bottles, in which a cross clamp according to an embodiment of the present invention can be used. The conveyor includes a transport mat 105, for instance formed by a succession of links hinged one to another so as to define a substantially planar support surface for supporting the articles to be transported (not shown in the drawing); the transport mat 105 extends along a transport path and is put in movement, in the direction of the arrow F, by suitable motor means (not shown in the drawing).

Along the transport path, sensor means are arranged, schematically indicated in the drawing with 110, for instance photoelectric cells, having for example the function of detecting the passage of transported articles. The sensors 110, situated at the two sides of the transport mat 105, are mounted to respective bars 115 substantially horizontal and extending in the direction of the transport path. The bars 115 are it turn mounted, by means of cross clamps 120 according to an embodiment of the present invention, to respective, substantially vertical bars 125, which are in turn mounted to a part of a frame 130 of the conveyor.

It is emphasized that the example shown in Figure 1 is only one of the several possible uses of the cross clamps; remaining within the field of conveyors, the cross clamps can be used for joining to each other bars intended to support transport guides for the articles. It has besides to be clear that the field of conveyors of articles is merely one of the possible fields of application of the cross clamps.

In the following, some embodiments of cross clamp according to the present invention will be described in detail.

A cross clamp 200 according to an embodiment of the present invention is shown in exploded view in Figure 2.

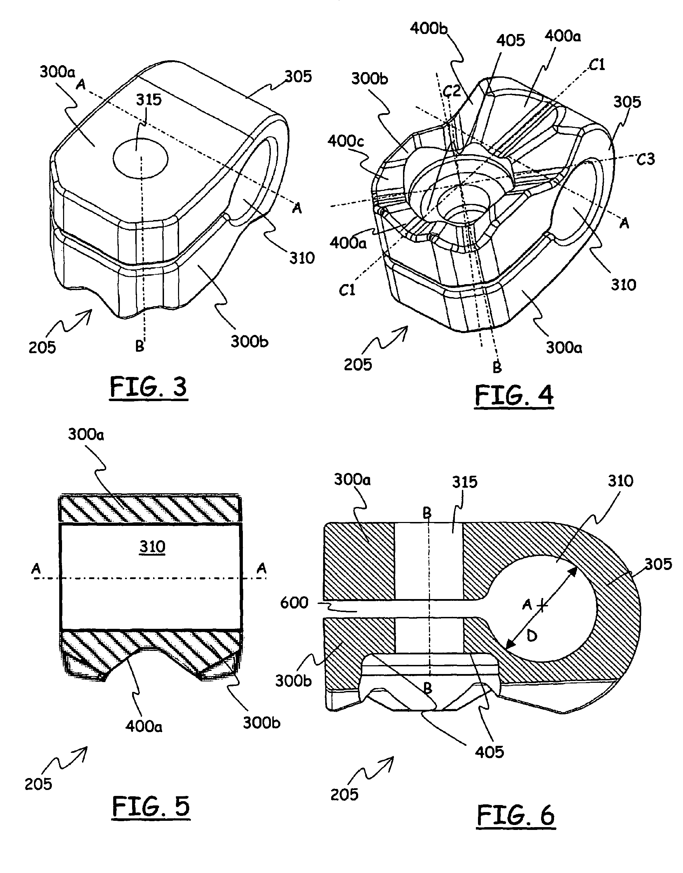

The cross clamp 200 includes a clamp body 205, visible in detail in Figures 3, 4, 5 and 6. The clamp body has a generically "C" shape, and it defines a pair of opposed jaws 300a and 300b, separated by a gap 600.

As is clearly visible in Figure 6, the gap 600 widens in correspondence with a junction wall 305 of the two jaws 300a and 300b, to form a first seat for a bar, said first seat being, in the exemplary embodiment shown, shaped as a through hole 310 that crosses the clamp body 205 extending along a first axis A and being laterally open on the gap 600; the through hole 310 has a cross-section shaped such as to be able to accommodate a first bar 210. For instance the through hole 310 has a circular cross-section and a diameter D corresponding to, but slightly greater than the diameter of the bar 210; alternatively, the through hole 310 may have a square or generically rectangular cross-section, or any other shape, conjugate to the cross-sectional shape of the bars that the cross clamp is intended to join.

A further through hole 315 crosses from side to side the two jaws 300a and 300b, extending along a second axis B, orthogonal to the first axis A. The through hole 315 has for instance a circular cross-section and a diameter adapted for the insertion of the stem 215 of a connecting rod comprising an eyelet screw 220. The end of the through hole 315 situated at the side of the jaw 300b is provided with a flaring 405, so as to accommodate a portion of an eyelet 225 of the eyelet screw 220.

In correspondence with one exposed surface thereof, opposite with respect to the gap 600, a plurality of, in the example three, second bar seats are formed in the jaw 300b, in the shown example constituted by respective grooves 400a, 400b and 400c with a transversal section of generically "V" shape. Each of the three grooves 400a, 400b and 400c extend along a respective direction, defined by respective axes C1, C2 and C3 lying in a common plane and orthogonal to the axis B. The axes C1, C2 and C3 of the three grooves 400a, 400b and 400c form respective angles with the axis A, particularly the axis C1 of the groove 400a forms an angle of 90°, while the axes C2 and C3 of the grooves 400b and 400c form angles of 45° and 135°.

It is emphasized that the number of seconds bar seats, for instance the number of grooves provided in the jaw 300b of the clamp body 205 and the angles that the respective axes form with the axis A of the through hole 310, do not constitute a limitation for the present invention.

The clamp body 205 is formed from a substantially rigid material, with a limited degree of elastic deformation, enough to allow the two jaws 300a and 300b to be brought closer (so as to reduce the height of the gap 600) in consequence of the application thereto of a compression strain, substantially in the direction of the axis B, and the return of the two jaws 300a and 300b in a rest position thereof. Thanks to the fact that the through hole 310 is laterally open and communicates with the gap 600, approaching the two jaws 300a and 300b also causes a slight reduction of the diameter D of the through hole 310. For instance, the clamp body 205 can be realized in synthetic material, for example in polyamide, preferably loaded with glass fibres (so as to confer greater resistance to the clamp body), and it can be formed by moulding. Alternatively, the clamp body 205 can be realized in metal, particularly in steel, preferably stainless steel, for instance by precision casting. Later on, a different embodiment of the clamp will be described in which the clamp body is realized by properly folding a sheet of steel shaped by shearing.

Back to Figure 2, the cross clamp 200 includes a tightening knob 230, which at the bottom is provided with a threaded hole adapted to engage a threaded end portion 235 of the stem 215, opposite to the eyelet 225.

The use of the cross clamp 200 is very simple, and the operations for joining by clamping the two bars are very fast.

Particularly, a possible (but not limitative) sequence of operations calls for inserting the bar 210 (that, with reference to the example shown in Figure 1, can be for instance one of the bars 125 previously mounted to the frame 130 of the conveyor) into the through hole 310 of the clamp body 205, making the latter slide on the bar 210 until it is brought to the desired position. The eyelet screw 220 is then inserted into the through hole 315, so that the threaded end 235 of the stem 215 protrudes from the hole 315 in correspondence of the jaw 300a; the knob 230 is then screwed onto the threaded end 235 of the stem 215 of the eyelet screw 220, without tightening. The eyelet 225 of the eyelet screw 220 is then angularly oriented approximately in the position that corresponds to the angle that a second bar 240 (for instance, still referring to Figure 1, one of the horizontal bars 115 intended to support the sensors 110) will have to form with the first bar 210 to which it has to be joined. At that point, the second bar 240 is inserted into the eyelet 225, and the angular position of the bar 240 is adjusted so that it is accommodated within the desired groove 400a, 400b or 400c, corresponding to the angle that the second bar 240 has to form with the first bar 210. Acting on the knob 230, the screw 220 is then put in traction: through the eyelet 225, the traction is transmitted to the second bar 240, that by traction is tightened against the walls of the selected groove 400a, 400b or 400c. At the same time, the compression strain exerted on the two jaws 300a and 300b by the knob 230, from a side, and by the bar 240 (subjected to traction by the eyelet screw) from the other, causes the slight deformation of the clamp body, enough to allow the two jaws 300a and 300b being brought closer, in this way clamping the first bar 210 within the through hole 310.

It can thus be appreciated that, by means of just one tightening operation, the double result is achieved of blocking both the bars, with significant saving of time.

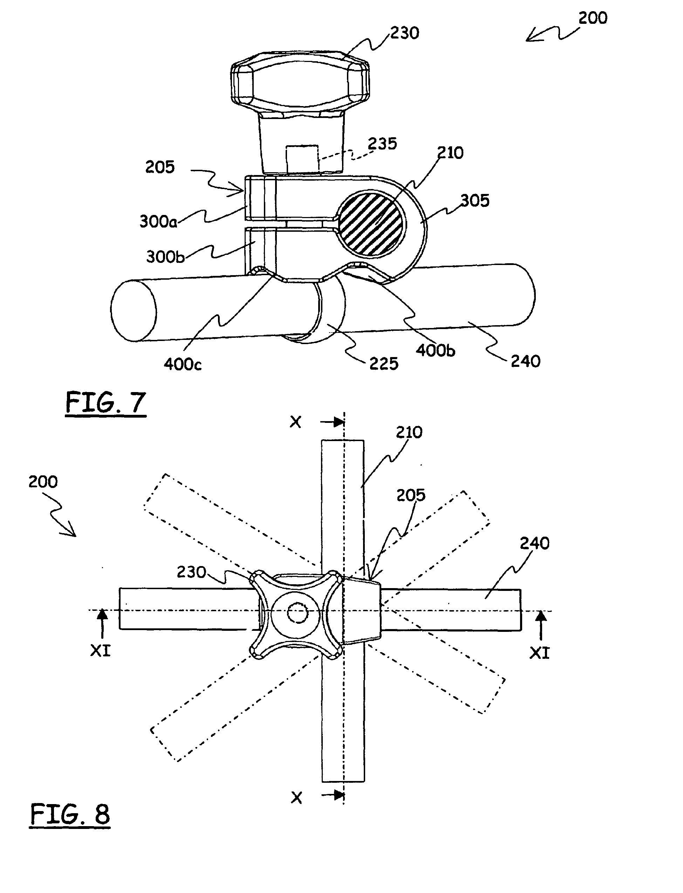

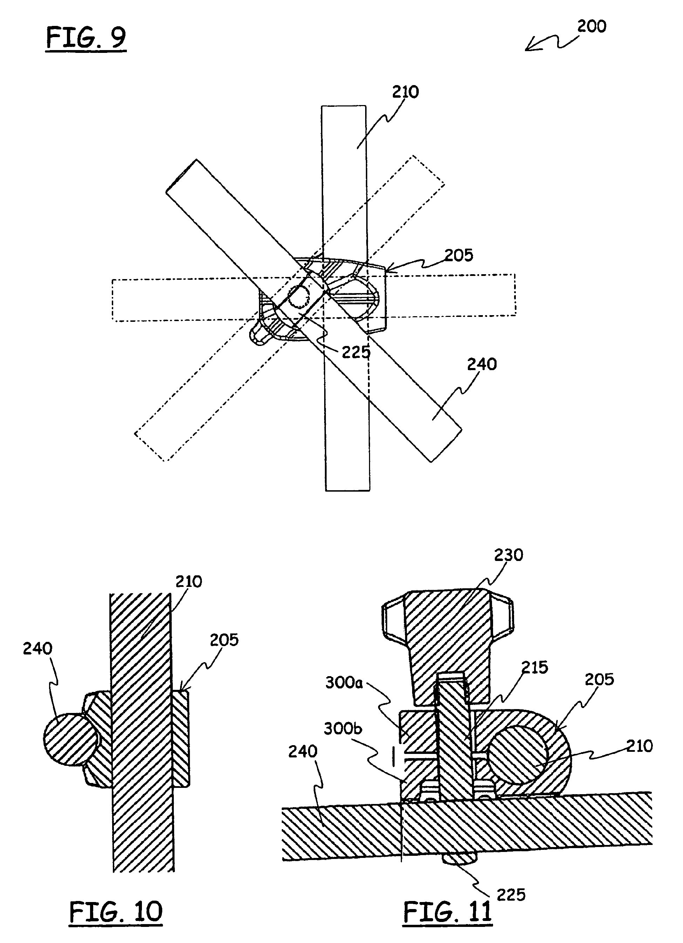

The assembled clamp 200 is shown in elevation in Figure 7, with the second bar 240 accommodated within the groove 400c; in Figure 8 the mounted clamp 200 is instead shown in top-plan view, with the second bar 240 accommodated within the groove 400a (the other two possible positions of the second bar are shown in dash-and-dot line), while in Figure 8 the mounted clamp 200 is shown in plan view from below, with the second bar 240 again accommodated within the groove 400c, as in Figure 7. Figures 10 and 11 show instead cross-sectional views of the mounted clamp 200 of Figure 8, according to the planes passing for the lines X-X and XI-XI, respectively.

It is emphasized that, in alternative to the knob 230, different tightening means can be provided, for instance threaded nuts. In some cases, the clamping of the two bars then may require the use of wrenches, which results in a slightly more cumbersome operation compared to the case in which the knob 230 is provided, however with a reduction of the overall cost of the component.

The cross clamp according to the described embodiments has several advantageous aspects.

Firstly, differently from the known cross clamps, it does not require two connecting rods, particularly two eyelet screws (with the related knobs or other tightening means), but just one. This reduces the overall cost of the component, and the increased assembly operations speed reduces the installation time, achieving a further money saving.

Secondly, according to the present invention, it is possible, with a same clamp body, to realize a cross clamp with two or more possibilities of orientation of the axes of the two bars to be joined: to such end, it is sufficient to provide, in the clamp body, and particularly in one of the two jaws, two or more second bar seats, for instance two or more grooves, extending along different directions. This reduces the number of different components that have to be foreseen in the catalogue, or to be stored, with significant saving and simplification of the management.

Another advantageous aspect is the provision of the "V"-shaped grooves to accommodate the second bar: the particular transversal section of the grooves allows in fact using bars of different diameters; a same clamp body can for instance be used in combination with bars of different diameter, from 10 mm to 18 mm.

A further advantageous aspect of the clamp according to the described embodiment of the invention, particularly in case the clamp body is realized by moulding of plastics, resides in the relative easiness of manufacturing. In fact, thanks to the particular generic "C" shape of the clamp body, the equipment necessary for moulding is particularly simple, and such simplicity also makes it possible to mould in parallel two or more clamp bodies at a time.

An embodiment of a cross clamp 1200 which is not part of the invention is shown in Figures from 12 to 18, and it will be described hereinbelow.

Particularly, in this different embodiment the cross clamp 1200 includes a clamp body 1205 realized by properly folding of a sheet of metal, particularly steel, previously shaped through shearing.

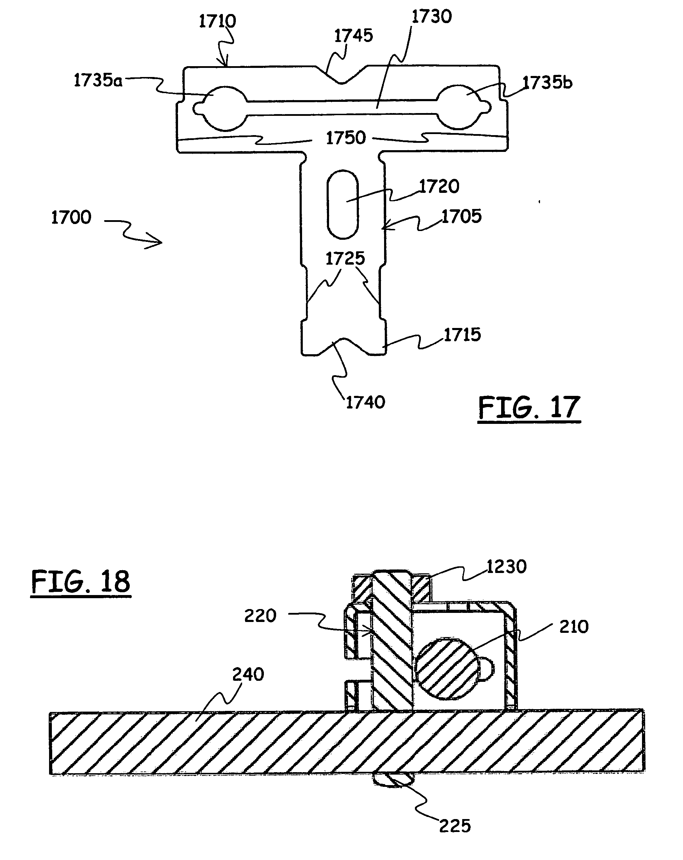

A planar shape of the clamp body 1205 is shown in Figure 17; through shearing of a sheet of metal, particularly of steel, a plate-like element 1700 is obtained, substantially shaped as a "T", with a first portion 1705 forming a stem of the "T", and a second portion 1710 forming the crossbar of the "T." The first portion 1705 has a free end 1715 with a "V"-shaped indentation 1740, and, close to the joining to the second portion 1710, a slot 1720 is formed, substantially in median position; the first portion 1705 further has, in intermediate position between the joining to the second portion 1710 and the free end 1715, a narrow portion 1725. In the second portion 1710 a slot 1730 is formed that extends, transversally to the first portion 1705, for a prevailing part of the length of the second portion 1710, and, in correspondence of the two ends of the slot 1730, two widened circular openings 1735a and 1735b are formed. Centrally and at opposite sides of the joining to the first portion 1705, along the edge of the second portion a "V"-shaped indentation 1745 is obtained. The second portion 1710 has a widened portion 1750, from the side of the joining to the first portion 1705.

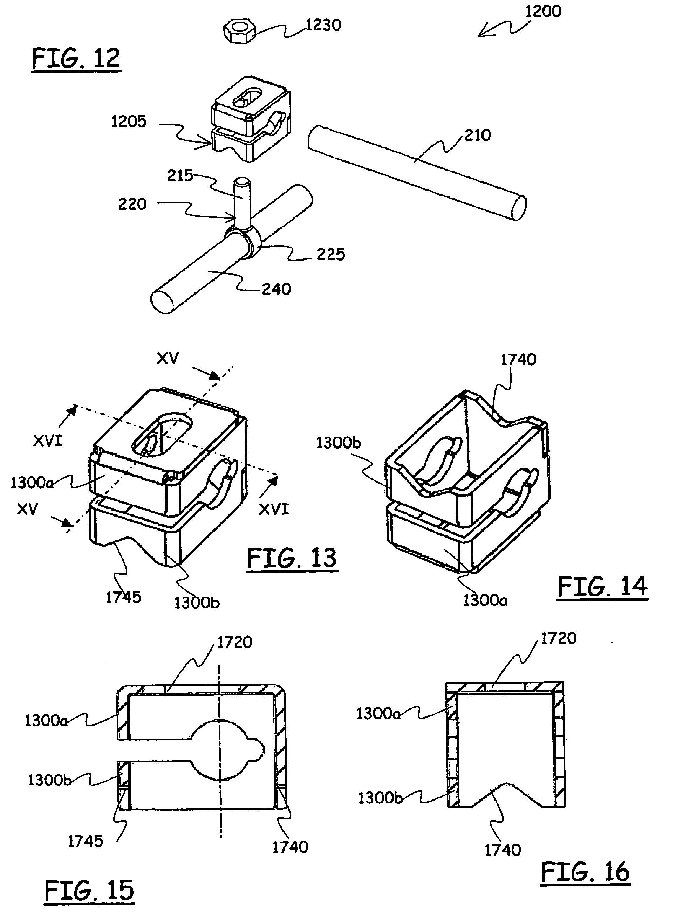

When the plate-like element 1700 is folded, so as to obtain the clamp body 1205 visible in Figures 13, 14, 15 and 16, the slot 1730 forms the gap between the two jaws 1300a and 1300b, and the two widened circular openings 1735a and 1735b are aligned to each other, and define a passage for the first bar 210; the two "V"-shaped indentations 1740 and 1745 are also aligned along an axis that, in the shown non limitative example, is orthogonal to that of the passage defined by the two openings 1735a and 1735b, and they define the seat for the second bar 240. The widening 1750 fits with the narrowing 1725, and this confers rigidity to the clamp body.

The use of the clamp 1200 is similar to that of the clamp according to the previously described embodiment: the eyelet screw 220, put in traction through, in this example, a nut 1230 (although also in this case it is possible to use a knob, to facilitate the operations of installation), acts onto the second bar 240 inserted in the eyelet 225 and accommodated within the two indentations 1740 and 1745; the nut 1230, from one side, pressing against the edges of the eyelet 1720, and the bar 240, from the other side, pressing against the walls of the indentations 1740 and 1745, determine the tightening of the two jaws 1300a and 1300b, and in this way block the bar 210 in position.

The present invention has been herein described making reference to a possible embodiment thereof, that is not to be intended in limitative way, but as mere example. The skilled technician, in order to satisfy particular and/or contingent needs, can bring several changes to the embodiments described, as also conceive different embodiments, without nevertheless departing from the protection scope of the invention, defined by the following claims.

The use of eyelet screws is to be intended only as a possibility, and it must not be considered limitatively: in general, it is possible to use any mechanical element adapted to exert a traction action on one of the bars to be joined, particularly exerting on the bar a traction transversal thereto.

Furthermore, the number of jaws provided in the clamp body of can be higher than two.

## Claims

1. A cross clamp adapted to join a first and a second bar (210,240), comprising:
a clamp body (205) comprising at least a first and a second opposed jaw (300a,300b), and a first seat (310) formed in the clamp body between the first and the second jaws and extending in a first direction (A), said first seat being in use adapted to accommodate the first bar, the clamp body further including at least a second seat (400a,400b,400c) formed in the second jaw and extending along a second direction (C1,C2,C3), the second seat being in use adapted to accommodate the second bar, a transversal traction exerted by traction means on the second bar being adapted to block the second bar in said at least one second seat,
said traction means (215, 220, 225, 230) being adapted in use to engage the second bar and, when operated, to exert on the second bar a traction substantially transversal thereto,
such that a compression action exerted by the second bar on said second jaw in consequence of the traction exerted by the traction means, and a corresponding compression action exerted by the traction means on the first jaw determining the tightening of the jaws for clamping the said first bar,
**characterised in that** said at least one second seat includes a groove formed in the second jaw and having a transversal section generically "V"-shaped and said at least one second seat includes at least two seats, extending along respective directions.

2. The clamp according to any of the preceding claims, in which the clamp body has a generic "C" shape.

3. The cross clamp according to any of the preceding claims, in which said traction means include a connecting rod with an eyelet (220), having a stem (215) adapted to be inserted into a through hole (315) formed in the clamp body so as to cross said first and second jaws, said eyelet being adapted, in use, to engage said second bar.

4. The cross clamp according to claim 3, in which said traction means further include tightening means (230;1230) for putting in traction the eyelet connecting rod.

5. The cross clamp according to claim 4, in which said tightening means include screwing means adapted to be screwed on a threaded end of the stem of the eyelet connecting rod opposed to the eyelet.

6. The cross clamp according to claim 5, in which said tightening means include a knob for a direct manual tightening.

7. The cross clamp according to any of the preceding claims, in which said clamp body is made of synthetic material, particularly polyamide loaded with glass fibres.

8. The cross clamp according to any of the claims from 1 to 6, in which said clamp body is made in metal, particularly by precision casting.

9. The clamp according to any of the claims from 1 to 6, in which said clamp body includes a plate of metal shaped by shearing and folded up.

## Patentansprüche

1. Kreuzklemme, die zur Verbindung einer ersten und einer zweiten Stange (210, 240) geeignet ist, die Folgendes aufweist:
einen Klemmenkörper (205), der mindestens eine erste und eine zweite gegenüberliegende Klaue (300a, 300b) aufweist, und einen ersten Sitz (310), der in dem Klemmenkörper zwischen den ersten und zweiten Klauen ausgeformt ist und sich in einer ersten Richtung (A) erstreckt, wobei der erste Sitz im Gebrauch geeignet ist, um die erste Stange aufzunehmen, wobei der Klemmenkörper weiter mindestens einen zweiten Sitz (400a, 400b, 400c) aufweist, der in der zweiten Klaue ausgeformt ist und
sich entlang einer zweiten Richtung (C1, C2, C3) erstreckt, wobei der zweite Sitz bei der Anwendung geeignet ist, um die zweite Stange aufzunehmen, wobei ein quer verlaufender Zug, der durch Zugmittel an der zweiten Stange ausgeübt wird, geeignet ist, um die Stange in dem mindestens einen zweiten Sitz zu blockieren,
wobei die Zugmittel (215, 220, 225, 230) bei der Anwendung geeignet sind, um in Eingriff mit der zweiten Stange zu kommen, und, wenn sie im Einsatz sind, auf die zweite Stange einen Zug auszuüben, der im Wesentlichen quer dazu liegt;
sodass eine Druckwirkung, die von der zweiten Stange auf die zweite Klaue infolge des Zugs ausgeübt wird, der von den Zugmitteln ausgeübt wird, und eine entsprechende Druckwirkung, die von den Zugmitteln auf die erste Klaue ausgeübt wird, die Haltekraft der Klauen zum Festklemmen der ersten Stange bestimmen,
**dadurch gekennzeichnet, dass** der mindestens eine zweite Sitz eine Nut aufweist, die in der zweiten Klaue ausgeformt ist und einen Querschnitt hat, der im Allgemeinen "V-förmig" ist, und wobei der mindestens eine zweite Sitz mindestens zwei Sitze aufweist, die sich entlang jeweiligen Richtungen erstrecken.

2. Kreuzklemme nach Anspruch 1, wobei der Klemmenkörper eine allgemeine "C-Form" hat.

3. Kreuzklemme nach einem der vorhergehenden Ansprüche, wobei die Zugmittel eine Verbindungsstange mit einem Auge bzw. einer Öse (220) aufweisen, und zwar mit einem Schaft (215), der geeignet ist, um in ein Durchgangsloch (315) eingeführt zu werden, welches in dem Klemmenkörper ausgeformt ist, um quer zu den ersten und zweiten Klauen zu verlaufen, wobei die Öse im Gebrauch geeignet ist, um mit der zweiten Stange in Eingriff zu kommen.

4. Kreuzklemme nach Anspruch 3, wobei die Zugmittel weiter Befestigungsmittel (230, 1230) aufweisen, um die Ösenverbindungsstange unter Zug zu setzen.

5. Kreuzklemme nach Anspruch 4, wobei die Befestigungsmittel Schraubmittel aufweisen, die geeignet sind, um auf eine mit Gewinde versehenes Ende des Schaftes der Ösenverbindungsstange gegenüberliegend zur Öse geschraubt zu werden.

6. Kreuzklemme nach Anspruch 5, wobei die Befestigungsmittel einen Knopf für ein direktes Festziehen per Hand aufweisen.

7. Kreuzklemme nach einem der vorhergehenden Ansprüche, wobei der Klemmenkörper aus synthetischem Material gemacht ist, insbesondere aus Polyamid, das mit Glasfasern verstärkt ist.

8. Kreuzklemme nach einem der Ansprüche 1 bis 6, wobei der Klemmenkörper aus Metall gemacht ist, insbesondere durch Präzisionsguss.

9. Kreuzklemme nach einem der Ansprüche 1 bis 6, wobei der Klemmenkörper eine Metallplatte aufweist, die durch Scheren und Auffalten geformt ist.

## Revendications

1. Bride de connexion croisée prévue pour assembler une première barre avec une seconde barre (210, 240), comprenant :
un corps de bride (205) présentant au moins un premier et un second mors (300a, 300b) opposés l'un à l'autre et un premier logement (310) ménagé dans le corps de bride entre le premier et le second mors et s'étendant dans une première direction (A), ledit premier logement étant apte à recevoir pendant l'utilisation la première barre, le corps de bride comprenant également au moins un deuxième logement (400a, 400b, 400c) ménagé dans le second mors et s'étendant dans une deuxième direction (C1, C2, C3), ledit deuxième logement étant prévu pour recevoir la seconde barre, des moyens de traction exerçant sur la seconde barre une traction transversale propre à bloquer ladite seconde barre dans ledit ou l'un desdits deuxième(s) logement(s),
lesdits moyens de traction (215, 220, 225, 230) étant aptes à recevoir pendant l'utilisation la seconde barre et, lorsqu'ils sont actionnés, pour exercer sur la seconde barre une traction sensiblement transversale à celle-ci,
de façon qu'une action de compression exercée par la seconde barre sur ledit second mors sous l'effet de la traction exercée par les moyens de traction et une action de compression correspondante exercée par les moyens de traction sur le premier mors définissent le serrage des mors permettant de bloquer ladite première barre,
**caractérisée en ce que** ledit ou lesdits deuxième(s) logement(s) présente(nt) une rainure formée dans le second mors et dont la section transversale affecte la forme générale d'un « V » et **en ce que** ledit ou lesdits deuxième(s) logement(s) comprenne(nt) au moins deux logements s'étendant dans des directions respectives.

2. Bride de connexion selon l'une quelconque des revendications précédentes, dans laquelle le corps de bride affecte la forme générale d'un « C ».

3. Bride de connexion croisée selon l'une quelconque des revendications précédentes, dans laquelle lesdits moyens de traction comprennent un élément de liaison à oeillet (220) présentant une tige (215) prévue pour être insérée dans un trou débouchant (315) formé dans le corps de bride de manière à traverser lesdits premier et second mors, ledit oeillet étant apte à recevoir, pendant l'utilisation, ladite seconde barre.

4. Bride de connexion croisée selon la revendication 3, dans laquelle lesdits moyens de traction comprennent également des moyens de serrage (230 ; 1230) destinés à exercer une traction sur l'élément de liaison à oeillet.

5. Bride de connexion croisée selon la revendication 4, dans laquelle lesdits moyens de serrage comprennent des moyens de vissage prévus pour être vissés sur l'extrémité filetée de la tige de l'élément de liaison à oeillet, opposée audit oeillet.

6. Bride de connexion croisée selon la revendication 5, dans laquelle lesdits moyens de serrage comprennent un bouton permettant un serrage direct à la main.

7. Bride de connexion croisée selon l'une quelconque des revendications précédentes, dans laquelle le corps de bride est en matériau synthétique, notamment en polyamide renforcé par des fibres de verre.

8. Bride de connexion croisée selon l'une quelconque des revendications 1 à 6, dans laquelle ledit corps de bride est réalisé en métal, notamment par moulage de précision.

9. Bride de connexion selon l'une quelconque des revendications 1 à 6, dans laquelle ledit corps de bride se compose d'une plaque métallique façonnée par cisaillement et repliée.
